# FASCICULE DE BREVET EUROPEEN

(11) **EP 0 429 359 B1**
(45) Date de publication et mention de la délivrance du brevet: **20.09.1995**
(21) Numéro de dépôt: 90403283.6
(22) Date de dépôt: 21.11.1990
(51) Int. Cl.: F23D 14/82, F16K 17/38

(54) **Brûleur radiant à arrêt automatique en cas de prise de feu arrière**
Strahlungsbrenner mit automatischem Stillsetzen im Fall eines Flammenrückschlages
Radiant burner with automatic shut-off in case of flashback

(30) Priorité: 21.11.1989 FR 8915252
(43) Date de publication de la demande: 29.05.1991
(73) Titulaire: SOLARONICS VANEECKE, F-59280 Armentieres (FR)
(72) Inventeur: Debacque, Patrick, F-59930 La Chapelle D'Armentieres (FR); Coppin, Jean Gabriel, F-59280 Armentieres (FR)
(74) Mandataire: Keib, Gérard

(56) Documents cités:
- DE-A- 1 526 013
- DE-A- 2 453 078
- FR-A- 1 415 577
- FR-A- 2 304 013
- PATENT ABSTRACTS OF JAPAN vol. 7, no. 145 (M-224)(1290) 24 juin 1983,& JP-A-58 55607 (SHARP K.K.) 2 avril 1983

## Description

La présente invention se rapporte à un procédé d'agencement d'un brûleur radiant pour son arrêt automatique en cas de prise de feu arrière et à un dispositif d'obturation automatique pour la mise en oeuvre de ce procédé.

Des brûleurs radiants sont utilisés, par exemple dans les installations de séchage ou de rectification du profil d'humidité d'une feuille de papier ou textile en déplacement continu.

Le principe général des brûleurs radiants est de transformer la plus grande part d'une énergie fournie sous forme convective par la combustion d'un gaz en une énergie radiative.

Il faut noter que pour des raisons de sécurité, la plupart des radiants modernes fonctionnant au gaz sont du type air/gaz séparé. L'air et le gaz sont mélangés au dernier moment, juste en aval du radiant dans la chambre de mélange. Un brûleur radiant de ce type comprend donc une alimentation en air, une alimentation en gaz, une chambre ou tube de mélange, une chambre de répartition du mélange et une tête ou support de combustion.

A la sortie de la chambre de répartition, ils comportent une ou plusieurs plaquettes en matériau réfractaire et bon isolant thermique (céramique, fibre céramique ou métallique...) dont le rôle est de supporter la combustion d'une part et de transformer en rayonnement infrarouge la fraction de la chaleur de combustion récupérée par contact avec les gaz chauds d'autre part.

A cette ou ces plaquette(s) peut être éventuellement associé un écran, qui récupère une partie de l'enthalpie encore contenue dans les produits de combustion et la transforme en énergie radiative supplémentaire.

La combustion s'opère donc au niveau de la plaquette et plus exactement sur sa surface antérieure, après l'écoulement du mélange gazeux à travers celle-ci.

L'une des défaillances classiques de brûleur radiant est le phénomène que l'on appelle rentrée de combustion ou prise de feu arrière. Lors d'un tel phénomène la combustion a lieu dans la chambre de répartition à l'arrière de la plaquette alors qu'elle devrait normalement s'effectuer en face avant.

Les causes de prise de feu sont diverses et peuvent être classées en trois catégories.

La prise de feu peut être provoquée par une rentrée de combustion à travers la face avant de la plaquette. En effet, dans certains cas, la combustion peut rentrer à travers la plaquette et avoir lieu à l'arrière de celle-ci à cause par exemple d'une augmentation excessive de la température de surface de la plaquette due entre autre à la présence d'un réflecteur en face du brûleur, à l'obturation partielle ou totale de la surface de la plaquette, à un préchauffage excessif du mélange, à un enrichissement en oxygène, à certaines configurations de cyclage au cours desquelles le brûleur radiant est modulé en température et puissance... Cette rentrée de combustion à travers la face avant de la plaquette peut également être provoquée par des défauts de celle-ci, par exemple par une mauvaise homogénéité ou le vieillissement du matériau la constituant (concernant la porosité, la conductivité thermique etc...).

Une autre cause de prise de feu sont les fuites à l'arrière du brûleur radiant. En cas de fuite, le mélange va s'enflammer au contact des parois chaudes du brûleur et dans certains cas la combustion va rentrer à travers l'orifice générateur de la fuite à l'arrière de la plaquette du radiant. Les causes de fuite arrière peuvent être multiples, par exemple l'usure des joints après vieillissement en fin de durée de vie du brûleur radiant, défaut de fabrication...

L'allumage du mélange à l'arrière du brûleur radiant peut également être provoqué par la mise en présence du mélange avec un point chaud ou une étincelle avant son introduction dans la tête du radiant. En effet, certains systèmes d'allumage de radiant comportent une électrode d'allumage alimentée par une dérivation se raccordant latéralement sur le tube mélangeur et si l'étincelle d'allumage ne se produit pas au bon endroit à savoir à l'extrémité de la veilleuse, l'allumage peut se transmettre à l'intérieur du tube mélangeur.

Or, les conséquences de prise de feu arrière peuvent être graves si le brûleur incriminé n'est pas arrêté rapidement. En effet, toute la puissance va être dégagée par l'arrière dans la chambre de répartition qui va s'échauffer considérablement jusqu'à 800 à 1000°C. L'environnement arrière (câblage...) risque donc d'être endommagé, des incendies peuvent être provoqués en cas de présence de matières inflammables à proximité (papiers, films plastiques,...). Enfin, après quelques jours de fonctionnement dans cet état l'enveloppe de la chambre de répartition du brûleur radiant risque de s'ouvrir mettant ainsi à nu la flamme.

Dans les systèmes traditionnels d'assemblage de brûleurs radiants en voûte ou en panneau, les brûleurs étaient accessibles par l'arrière. Donc au cours des opérations normales de maintenance il était possible d'identifier rapidement les brûleurs radiants défectueux et de les changer s'il était nécessaire.

De plus en plus on réalise maintenant des batteries de brûleurs radiants totalement capotées et de ce fait la détection visuelle des défauts est difficile sinon impossible.

Il est donc nécessaire de mettre au point des techniques de détection ne nécessitant pas la vision directe de l'arrière des brûleurs radiants. Les solutions existantes utilisent en particulier des sondes de température ou des détecteurs infrarouges. En particulier, des sondes de température sont mises en place sur l'enveloppe de la chambre de répartition et raccordées par câblage à une électrovanne commandée électroniquement et disposée soit directement sur chacun des brûleurs soit reliée à l'électrovanne existante de commande de la rangée complète de brûleurs.

On connaît également, notamment par le brevet français No. 1 415 577, un dispositif de sécurité consistant à sensibiliser une zone de la surface radiante de manière à y permettre préférentiellement à toute autre zone, la naissance d'un retour de flamme limité que l'on utilise pour couper l'alimentation du brûleur en combustible. Plus précisément, une chambre de détection est aménagée dans la zone "immédiate amont" de la surface radiante, un système à thermocouple(s) permet de détecter les éventuelles élévations anormales de température dans cette chambre, et un système à électrovanne(s) de commande de l'arrivée du combustible est lui-même commandé au moyen de ce thermocouple.

Les solutions précédemment décrites présentent un certain nombre d'inconvénients. Ce sont en général des systèmes lourds et coûteux nécessitant l'installation de câblage et d'électronique spéciaux. Dans le cas le plus simple, de raccordement à l'électrovanne existante de la rangée de radiants, il est nécessaire en cas de détection de couper une rangée entière de brûleurs radiants en attendant le remplacement du radiant défectueux. Or, il est bien évident que l'arrêt complet d'une rangée de brûleurs radiants durant le temps de réparation est préjudiciable à la performance de l'installation.

Le document DE-A-1 526 013 décrit et représente, pour un brûleur radiant du type comportant un porte-injecteur portant une tête d'injecteur munie d'un orifice d'alimentation en gaz carburant ainsi qu'une chambre de répartition de mélange air/gaz délimitée par une plaque rayonnante et un tube dans lequel débouche l'orifice d'alimentation et débouchant lui-même dans la chambre de répartition, un dispositif d'obturation de l'orifice d'alimentation pour provoquer un arrêt automatique en cas de feu arrière, lequel dispositif d'obturation comporte une partie déformable de détection de température reliée par une tige de liaison à une partie d'obturation de l'orifice d'entrée destinée à venir obturer cet orifice en cas de détection d'une température déterminée. Plus précisément, le dispositif d'obturation de l'orifice d'alimentation en gaz comporte un élément à température de fusion contrôlée agencé en amont de la chambre de mélange et qui est relié à un obturateur dont l'élément de fermeture est sollicité élastiquement dans la direction d'obturation et est retenu en position ouverte par l'élément à température de fusion contrôlée.

Ce dispositif est efficace, mais il n'intervient que lorsqu'un retour de flamme se produit et atteint la chambre de mélange. Il nécessite à cet effet un agencement complexe ayant pour but de stabiliser la flamme en retour dans la chambre de mélange pour provoquer la fusion de l'élément. Cet agencement est complexe à réaliser et peu fiable dans la mesure où il repose sur un équilibre des vitesses d'écoulement du gaz et de la flamme en retour.

Afin de remédier à ces inconvénients, l'invention propose un brûleur radiant, du type comportant un porte-injecteur portant une tête d'injecteur munie d'un orifice d'alimentation en gaz carburant seul ou en gaz carburant et en un autre gaz tel que l'air, une chambre de répartition du mélange air/gaz délimitée par une plaque rayonnante, un tube dans lequel débouche l'orifice d'alimentation et débouchant lui-même dans la chambre de répartition, et un dispositif d'obturation de l'orifice d'alimentation pour provoquer un arrêt automatique en cas de feu arrière, ce dispositif d'obturation étant du type comportant une partie déformable de détection de température reliée par une tige de liaison à une partie d'obturation dudit orifice d'entrée destinée à venir obturer cet orifice en cas de détection d'une température déterminée, brûleur caractérisé en ce que le dispositif d'obturation comporte un bâti constitué d'une pièce repliée à branches entretoisées, inséré en position fixe dans ledit tube, pénétrant dans la chambre de répartition, et qui porte la partie de détection laquelle est disposée dans cette chambre de répartition et la partie d'obturation laquelle est disposée dans ledit tube à proximité de l'orifice d'alimentation.

Ce dispositif mécanique réagit automatiquement dans la chambre de répartition lors d'une élévation de température anormale et par une transmission de mouvement le long du mélangeur entraîne l'obturation directe de l'injecteur de gaz, évitant ainsi la formation ultérieure de mélange air/gaz.

Grâce à ce dispositif aucune action sur les pièces fonctionnelles du brûleur n'est nécessaire, en effet, il est totalement indépendant de celles-ci, son action se limitant à l'obturation de la buse d'injection de gaz. Il faut noter que dans le cas le plus fréquent de brûleur de type air/gaz séparé, un dispositif qui obturerait le mélange air/gaz ne fonctionnerait pas. En effet, une obturation du tube mélangeur en aval des alimentations air et gaz provoquerait l'introduction du gaz dans l'air ou inversement selon la différence de pression entre les conduits d'alimentation d'air et de gaz. Il faut donc que le dispositif obture directement l'injecteur gaz.

Le dispositif conforme à l'invention est d'une grande facilité de mise en place et d'une grande simplicité, toute adaptation particulière est évitée et aucune électronique compliquée n'est à prévoir.

Ainsi, tout problème de défaillance du dispositif de commande est supprimé et le dispositif est particulièrement fiable.

Pour ce faire, la présente invention propose un procédé d'agencement d'un brûleur de préférence radiant pour son arrêt automatique en cas de prise de feu arrière remarquable en ce qu'il consiste à obturer l'alimentation en gaz ou en mélange air/gaz en réponse à une élévation de température dans la chambre de répartition du radiant grâce à un dispositif mis en place directement à l'intérieur du radiant.

Dans le cas d'un radiant à mélange air/gaz, c'est l'arrivée de ce mélange qui est obturée ; dans celui d'un radiant du type air/gaz séparé c'est l'arrivée du gaz qui est seule obturée, pour les raisons décrites plus haut.

Ce dispositif peut être mis en place dans le radiant par le haut, par démontage de l'injecteur de gaz ou de mélange gaz/air ; il peut également être mis en place dans le radiant par le bas par démontage de la chambre de répartition.

Selon un mode de réalisation préféré ladite partie de détection est déformable grâce à un élément à température de fusion contrôlée. Cet élément à température de fusion contrôlée peut être une brasure, une soudure ou une pièce d'agrafage préfabriquée. Grâce à ces agencements, seul l'élément à température de fusion contrôlée est détruit ou déformé lors de l'élévation de température, et la remise en état du dispositif d'obturation est particulièrement simple et peu coûteuse.

La partie de détection déformable peut être également un élément en métal à mémoire de forme. Dans ce cas, la nécessité d'une remise en état est supprimée dans la mesure où l'élément reprend sa forme initiale après refroidissement à la température normale de fonctionnement.

De préférence, l'élément à température de fusion contrôlée relie le bâti fixe et une pièce de liaison reliée au bâti de façon à pouvoir se déplacer et supportant l'élément d'obturation. Ainsi, la destruction de l'élément à température de fusion contrôlée, entraîne le déplacement automatique de la pièce de liaison par rapport au bâti fixe et l'obturation automatique de l'orifice.

Pour réaliser ce déplacement automatique, la pièce de liaison est de préférence sollicitée élastiquement, et plus précisément cette sollicitation élastique est réalisée de préférence par un ressort comprimé entre une partie du bâti fixe et une bride annulaire située sur l'élément de liaison.

Selon un mode de réalisation préféré, cette bride annulaire forme la portée d'obturation. Elle peut également en être indépendante, la portée d'obturation étant alors disposée sur la pièce de liaison à l'extrémité de celle-ci indépendamment de la bride annulaire de butée du ressort. Il est bien évident que tout autre agencement du ressort entre dans le cadre de la présente invention.

De préférence, le bâti est une bande métallique pliée en forme d'épingle dont les branches sont reliées par au moins une entretoise, cette ou ces dernières comportant un orifice au travers duquel est guidée la pièce de liaison formée d'une tige métallique dont une extrémité est fixée par l'élément à température de fusion contrôlée sur la base de l'épingle et dont l'autre extrémité est formée d'une bride annulaire formant la portée d'obturation, le ressort étant comprimé à l'état inactif entre une entretoise et la bride annulaire de la tige de liaison.

L'application préférée de ce dispositif d'obturation est la réalisation d'un dispositif d'arrêt automatique d'un brûleur de préférence radiant en cas de prise de feu arrière. Pour ce faire, le dispositif d'obturation est disposé dans le mélangeur de telle sorte que la partie de détection déformable est située dans la chambre de répartition du brûleur, où est susceptible de se produire la prise de feu arrière, et que la partie d'obturation est disposée à proximité de la tête de l'injecteur de gaz, afin qu'elle vienne obturer celle-ci à l'état actif.

L'invention est exposée ci-après plus en détail à l'aide de dessins représentant seulement un mode d'exécution.
- La figure 1 représente une vue frontale d'un mode de réalisation préféré du dispositif d'obturation conforme à l'invention.
- La figure 2 représente un injecteur de brûleur radiant équipé d'un tel dispositif d'obturation, l'injecteur étant représenté en coupe selon un plan vertical de symétrie longitudinale.

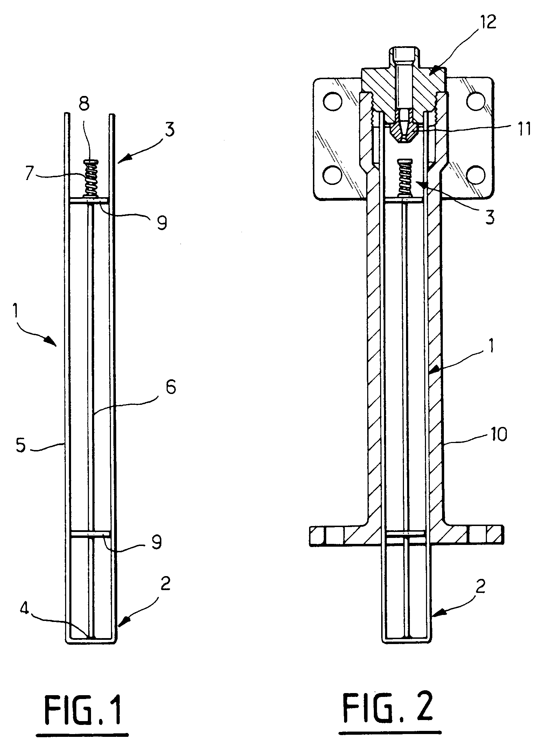

La figure 1 représente un mode de réalisation préféré du dispositif d'obturation d'un orifice conforme à l'invention.

Comme on peut le voir sur la figure 1, ce dispositif comporte une partie dite de détection déformable par fusion 2, en partie basse dans l'exemple représenté et une partie d'obturation 3, en partie haute qui est destinée à venir boucher un orifice.

La partie 2 est déformable par fusion grâce à un élément à température de fusion contrôlée. Dans l'exemple représenté cet élément est constitué d'une brasure ou d'une soudure 4 qui relie les éléments 5 et 6. Selon des variantes non représentées cette brasure ou soudure peut être remplacée par une pièce de fixation indépendante et préfabriquée, du type agrafe, qui viendrait fixer les éléments 5 et 6 et qui serait constituée d'un matériau fondant à la température déterminée afin de se détruire ou par une pièce en métal à mémoire de forme.

Les éléments 5 et 6 sont constitués respectivement d'un bâti fixe 5 et d'une pièce de liaison 6 reliée au bâti de façon à pouvoir se déplacer avec guidage sur celui-ci. Cette pièce de liaison 6 supporte à son extrémité supérieure une portée d'obturation 8 destinée à venir s'appliquer contre l'orifice à obturer. Pour ce faire, la pièce de liaison 6 est sollicitée élastiquement par un ressort hélicoïdal 7 afin d'amener la portée d'obturation 8 en position active de fermeture, lorsque la pièce de liaison 6 est libérée du bâti 5 en 4. Le ressort hélicoïdal 7 est donc en position inactive comprimé entre une partie du bâti 5 de préférence une entretoise 9, et une bride annulaire de l'élément de liaison 6. Selon l'exemple réalisé, cette bride annulaire constitue la portée d'obturation 8. Selon une variante de réalisation, la bride annulaire de retenue du ressort 7 peut être indépendante de la portée d'obturation 8, c'est-à-dire située par exemple en dessous de celle-ci, la pièce de liaison 6 présentant alors par rapport à l'exemple représenté une rallonge dirigée vers le haut et supportant à son extrémité la portée d'obturation.

Le bâti 5 est de préférence constitué d'une bande métallique pliée en forme d'épingle dont les branches sont reliées par au moins une entretoise 9; selon l'exemple représenté, les entretoises 9 sont au nombre de deux et comportent chacune un orifice au travers duquel est guidée la pièce de liaison 6 constituée dans ce cas d'une tige métallique. Une extrémité de la tige métallique 6 est donc fixée par la partie 4 à température de fusion contrôlée, sur la base de l'épingle du bâti 5 et son autre extrémité supporte la portée d'obturation 8. Le ressort hélicoïdal 7 est donc comprimé à l'état inactif entre une entretoise supérieure 9 et la portée d'obturation 8. Lors de la destruction par fusion de la fixation 4 la tige 6 coulisse sous l'effet du ressort 7; le ressort 7 et la dimension de la tige 6 sont choisis pour que lors de ce coulissement la portée d'obturation 8 vienne s'appliquer sur l'orifice, le ressort 7 étant alors encore suffisamment comprimé pour exercer une pression sur l'orifice en question.

La portée d'obturation 8 a une géométrie adaptée à celle du siège de l'orifice devant être obturé. Dans le cas d'un orifice conique, elle sera avantageusement constituée d'un cône inversé complémentaire.

La figure 2 représente l'application préférée du dispositif d'obturation déjà décrit. Ce dispositif est installé dans le tube mélangeur d'un brûleur radiant et est destiné à l'arrêt automatique du brûleur en cas de prise de feu arrière dans la chambre de répartition.

Pour ce faire, les dimensions du dispositif d'obturation sont choisies pour que le bâti 5 vienne s'insérer dans le tube mélangeur 10 et puisse y être fixé. La longueur du bâti et la constitution de la partie déformable par fusion et de la partie d'obturation sont telles que la partie 2 est située dans la chambre de répartition et la partie d'obturation 3 est agencée de façon à venir en position active obturer la tête d'injecteur 11 supportée par le porte injecteur 12.

En cas de prise de feu arrière, le dispositif vient donc obturer la tête d'injection 11 bouchant ainsi l'arrivée du gaz et dans ce cas, seule l'arrivée d'air (non représentée) reste active et le fonctionnement du brûleur défectueux est interrompu.

Après remise en état du brûleur, il suffit donc de réaliser une nouvelle fixation à température de fusion contrôlée des éléments 5 et 6 ou de remplacer le dispositif d'obturation usagé par un neuf. Ces opérations particulièrement simples peuvent être effectuées sur site.

La température de fonctionnement normale dans la chambre de répartition d'un brûleur radiant est d'environ 200°C. Selon la marge de tolérance que l'on admettra dans la chambre de répartition, la température de fusion de l'élément de fixation 4 sera donc comprise dans une plage allant de 200°C à 800°C. Selon un mode préférentiel, la brasure 4 sera réalisée en argent avec une température de fusion comprise entre 600 et 620°C et le bâti ainsi que la pièce de liaison seront réalisés en métal de préférence en acier inoxydable.

## Revendications

1. Brûleur radiant, du type comportant un porte-injecteur (12) portant une tête d'injecteur (11) munie d'un orifice d'alimentation en gaz carburant seul ou en gaz carburant et en un autre gaz tel que l'air, une chambre de répartition du mélange air/gaz délimitée par une plaque rayonnante, un tube (10) dans lequel débouche l'orifice d'alimentation et débouchant lui-même dans la chambre de répartition, et un dispositif d'obturation de l'orifice d'alimentation pour provoquer un arrêt automatique en cas de feu arrière, ce dispositif d'obturation étant du type comportant une partie déformable (2) de détection de température reliée par une tige de liaison (6) à une partie d'obturation (3) dudit orifice d'entrée destinée à venir obturer cet orifice en cas de détection d'une température déterminée, brûleur caractérisé en ce que le dispositif d'obturation comporte un bâti (5) constitué d'une pièce repliée à branches entretoisées, inséré en position fixe dans ledit tube (10), pénétrant dans la chambre de répartition, et qui porte la partie de détection (2) laquelle est disposée dans cette chambre de répartition et la partie d'obturation (3) laquelle est disposée dans ledit tube à proximité de l'orifice d'alimentation.

2. Brûleur radiant du type comportant un injecteur de gaz ou de mélange air/gaz, selon la revendication 1, caractérisé en ce que le dispositif d'obturation est mis en place dans le brûleur par le haut par démontage dudit porte-injecteur (12).

3. Brûleur radiant selon la revendication 1, caractérisé en ce que le dispositif d'obturation est mis en place dans le radiant par le bas par démontage de la chambre de répartition.

4. Brûleur radiant selon l'une quelconque des revendications 1 à 3, caractérisé en ce que la partie de détection (2) est déformable grâce à un élément à température de fusion contrôlée.

5. Brûleur radiant selon la revendication 4, caractérisé en ce que l'élément à température de fusion contrôlée est une brasure ou une soudure (4).

6. Brûleur radiant selon la revendication 4, caractérisé en ce que l'élement à température de fusion contrôlée est une pièce d'agrafage.

7. Brûleur radiant selon l'une quelconque des revendications 1 à 3, caractérisé en ce que la partie de détection (2) comporte un élément en métal à mémoire de forme.

8. Brûleur radiant selon l'une quelconque des revendications 4 à 7, caractérisé en ce que la partie de détection (2) comporte un élément reliant le bâti fixe (5) et une tige de liaison (6) portant une portée d'obturation (8), de telle sorte que la déformation de la partie de détection (2) rende mobile la tige de liaison (6) par rapport au bâti (5).

9. Brûleur radiant selon la revendication 8, caractérisé en ce que la tige de liaison (6) est sollicitée élastiquement afin d'amener la portée d'obturation (8) en position active d'obturation, lorsque la tige de liaison (6) est rendue mobile par rapport au bâti (5).

10. Brûleur radiant selon la revendication 9, caractérisé en ce qu'un ressort (7) est comprimé entre une partie du bâti (5) fixe et une bride annulaire située sur la tige de liaison (6).

11. Brûleur radiant selon la revendication 10, caractérisé en ce que la bride annulaire forme la portée d'obturation (8).

12. Brûleur radiant selon l'une quelconque des revendications 1 à 11, caractérisé en ce que le bâti (5) est une bande métallique pliée en forme d'épingle dont les branches sont reliées par au moins une entretoise (9), cette ou ces dernière(s) comportant un orifice au travers duquel est guidée la tige de liaison (6) qui est une tige métallique dont une extrémité est reliée par la partie de détection (2) à la base de l'épingle et dont l'autre extrémité porte une bride annulaire constituant une portée d'obturation (8), un ressort (7) étant comprimé à l'état inactif entre une entretoise (9) et la bride annulaire.

13. Brûleur radiant du type air/gaz séparés, selon l'une quelconque des revendications 1 à 12, caractérisé en ce que ledit orifice est un orifice d'alimentation en gaz.

14. Brûleur radiant du type à mélange air/gaz, selon l'une quelconque des revendications 1 à 12, caractérisé en ce que ledit orifice est un orifice d'alimentation en mélange air/gaz.

## Claims

1. Radiant burner of the type comprising a nozzle holder (12) carrying a nozzle head (11) equipped with an orifice for the supply of fuel gas alone or of fuel gas and another gas such as air, a chamber for distributing the air/gas mixture defined by a radiant plate, a tube (10) into which there opens the supply orifice and which itself opens into the distributing chamber, and a device for blocking the supply orifice to bring about an automatic shut-off in the event of backfire, this blocking device being of the type comprising a temperature-detecting deformable portion (2) connected by a connecting rod (6) to a blocking portion (3) of said inlet orifice intended to block this orifice if a predetermined temperature is detected, the burner being characterised in that the blocking device comprises a frame (5) consisting of a folded part having braced branches, the frame (5) being inserted in a fixed position in said tube (10) penetrating into the distributing chamber and carrying the detecting portion (3) which is arranged in this distributing chamber and the blocking part (3) which is arranged in said tube in the vicinity of the supply orifice.

2. Radiant burner of the type comprising a gas or air/gas mixture nozzle according to Claim 1, characterised in that the blocking device is positioned in the burner through the top by removal of said nozzle holder (12).

3. Radiant burner according to Claim 1, characterised in that the blocking device is positioned in the radiant member through the bottom by removal of the distributing chamber.

4. Radiant burner according to any one of Claims 1 to 3, characterised in that the detecting portion (2) is deformable by means of an element having a controlled melting temperature.

5. Radiant burner according to Claim 4, characterised in that the element having a controlled melting temperature is a brazing or soldering alloy (4).

6. Radiant burner according to Claim 4, characterised in that the element having a controlled melting temperature is a stapling member.

7. Radiant burner according to any one of Claims 1 to 3, characterised in that the detecting portion (2) comprises a metallic element having a shape memory.

8. Radiant burner according to any one of Claims 4 to 7, characterised in that the detecting portion (2) comprises an element connecting the fixed frame (5) and a connecting rod (6) carrying a blocking surface (8) in such a way that the deformation of the detecting portion (2) renders the connecting rod (6) movable relative to the frame (5).

9. Radiant burner according to Claim 8, characterised in that the connecting rod (6) is elastically stressed so as to bring the blocking surface (8) into an active blocking position when the connecting rod (6) is rendered mobile relative to the frame (5).

10. Radiant burner according to Claim 9, characterised in that a spring (7) is compressed between a fixed portion of the frame (5) and an annular flange located on the connecting rod (6).

11. Radiant burner according to Claim 10, characterised in that the annular flange forms the blocking surface (8).

12. Radiant burner according to any one of Claims 1 to 11, characterised in that the frame (5) is a metallic strip folded into the form of a pin of which the branches are connected by at least one brace (9), this brace or these braces comprising an orifice through which is guided the connecting rod (6) which is a metallic rod of which one end is connected by the detecting portion (2) to the base of the pin and of which the other end carries an annular flange constituting a blocking surface (8), a spring (7) being compressed in the inactive state between a brace (9) and the annular flange.

13. Radiant burner of the separate air/gas type according to any one of Claims 1 to 12, characterised in that said orifice is a gas supply orifice.

14. Radiant burner of the air/gas mixture type according to any one of Claims 1 to 12, characterised in that said orifice is an air/gas mixture supply orifice.

## Patentansprüche

1. Strahlungsbrenner mit einem Düsenhalter (12), der einen Düsenkopf (11) trägt, der mit einer Öffnung für die Zufuhr von Brenngas allein oder von Brenngas und einem anderen Gas wie Luft versehen ist, einer durch eine Strahlungsplatte begrenzten Kammer zur Verteilung des Luft/Gas-Gemisches, einem Rohr (10), in welches die Zufuhröffnung mündet und die selbst in die Verteilungskammer mündet, und einer Vorrichtung zur Absperrung der Zufuhröffnung zur Erzeugung eines automatischen Stillstands im Falle eines Flammenrückschlags, wobei die Absperrvorrichtung einen verformbaren Teil (2) zur Temperaturerfassung hat, der über eine Verbindungsstange (6) mit einem Absperrteil (3) der Eintrittsöffnung verbunden ist, der dazu dient, die Öffnung im Falle der Erfassung einer bestimmten Temperatur abzusperren, wobei der Brenner dadurch gekennzeichnet ist, daß die Absperrvorrichtung ein Gestell (5) aufweist, das aus einem umgebogenen Teil mit Verstrebungsschenkeln in Querrichtung besteht, in einer feststehenden Position in das Rohr (10) eingefügt ist, in die Verteilungskammer ragt und den Erfassungsteil (2) trägt, der in der Verteilungskammer und dem Absperrteil (3) angeordnet ist, der in dem Rohr in der Nähe der Zufuhröffnung angeordnet ist.

2. Strahlungsbrenner mit einer Düse für Gas oder ein Gas/Luft-Gemisch nach Anspruch 1, dadurch gekennzeichnet, daß die Absperrvorrichtung in dem Brenner von oben her durch Demontage des Düsenhalters (12) eingesetzt wird.

3. Strahlungsbrenner nach Anspruch 1, dadurch gekennzeichnet, daß die Absperrvorrichtung in dem Strahlungsabschnitt von unten her durch Demontage der Verteilungskammer eingesetzt wird.

4. Strahlungsbrenner nach einem der Ansprüche 1 bis 3, dadurch gekennzeichnet, daß der Erfassungsteil (2) aufgrund eines Elements mit kontrollierter Schmelztemperatur verformbar ist.

5. Strahlungsbrenner nach Anspruch 4, dadurch gekennzeichnet, daß das Element mit kontrollierter Schmelztemperatur eine Hartlotstelle oder eine Schweißstelle (4) ist.

6. Strahlungsbrenner nach Anspruch 4, dadurch gekennzeichnet, daß das Element mit kontrollierter Schmelztemperatur ein Falzteil ist.

7. Strahlungsbrenner nach einem der Ansprüche 1 bis 3, dadurch gekennzeichnet, daß der Erfassungsteil (2) ein Element aus Metall mit Formgedächtnis aufweist.

8. Strahlungsbrenner nach einem der Ansprüche 4 bis 7, dadurch gekennzeichnet, daß der Erfassungsteil (2) ein Element aufweist, welches das feststehende Gestell (5) und eine Verbindungsstange (6) verbindet, die eine Absperr-Auflagefläche (8) trägt, so daß die Verformung des Erfassungsteils (2) die Verbindungsstange (6) bezüglich des Gestells (5) bewegt.

9. Strahlungsbrenner nach Anspruch 8, dadurch gekennzeichnet, daß die Verbindungsstange (6) elastisch beaufschlagt wird, um die Absperr-Auflagefläche (8) in eine aktive Absperrposition zu bringen, wenn die Verbindungsstange (6) bezüglich des Gestells (5) bewegt wird.

10. Strahlungsbrenner nach Anspruch 9, dadurch gekennzeichnet, daß eine Feder (7) zwischen einem Teil des feststehenden Gestells (5) und einem kreisringförmigen Flansch komprimiert ist, der sich auf der Verbindungsstange (6) befindet.

11. Strahlungsbrenner nach Anspruch 10, dadurch gekennzeichnet, daß der kreisringförmige Flansch die Absperr-Auflagefläche (8) bildet.

12. Strahlungsbrenner nach einem der Ansprüche 1 bis 11, dadurch gekennzeichnet, daß das Gestell (5) ein Metallband ist, das in Form einer Nadel gebogen ist, deren Arme über mindestens eine Querverstrebung (9) verbunden sind, wobei diese oder letztere eine Öffnung aufweist (aufweisen), durch welche die Verbindungsstange (6) geführt wird, die eine Metallstange ist, bei der ein Ende über den Erfassungsteil (2) mit der Basis der Nadel verbunden ist und das andere Ende einen kreisringförmigen Flansch trägt, der eine Absperr-Auflagefläche (8) bildet, wobei eine Feder (7) im inaktiven Zustand zwischen einer Verstrebung (9) und dem kreisringförmigen Flansch komprimiert ist.

13. Strahlungsbrenner mit Luft/Gas-Trennung nach einem der Ansprüche 1 bis 12, dadurch gekennzeichnet, daß die Öffnung eine Gaszufuhröffnung ist.

14. Strahlungsbrenner mit Luft/Gas-Mischung nach einem der Ansprüche 1 bis 12, dadurch gekennzeichnet, daß die Öffnung eine Luft/Gas-Gemisch-Zufuhröffnung ist.
